# EUROPEAN PATENT APPLICATION

(11) **EP 3 756 880 A1**
(43) Date of publication of application: **30.12.2020**
(21) Application number: 19382547.8
(22) Date of filing: 27.06.2019
(51) Int. Cl.: B32B 5/26, B32B 5/12, B64C 1/10, B64C 1/06

(54) **FIRE PROTECTION DEVICE FOR AN AIRCRAFT**

(71) Applicant: Airbus Operations, S.L., 28906 Getafe (ES)
(72) Inventor: CABEZA HUERTAS, Javier, 28906 Getafe (ES); AGUADO PANO, Carlos, 28906 Getafe (ES); LOPEZ FERNANDEZ, David, 28906 Getafe (ES); GONZALEZ MONTES, Hector, 28906 Getafe (ES)

(57) **Abstract**

The invention relates to a device (10, 20) for limiting the propagation of fire comprising a plurality of overlaid layers (11, 12, 13, 14, 15, 21, 22, 23, 24, 25, 26, 27, 28) comprising carbon fiber reinforced polymer (CFRP), characterized in that it is exempt of glass fiber. The invention also extends to an aircraft component and an aircraft (50) comprising such device.

## Description

The invention relates to a fire protection device. In particular the invention relates to a fire protection for forming a fire barrier in an aircraft.

In large vehicles such as ferries and aircrafts different volumes are reserved for different uses: engines volume, passenger volume, freight volume, etc. Some areas such as the engine volumes are more prone to fire hazard than other. It is particularly the case of a tail of most commercial aircrafts in which an auxiliary power unit (APU) is placed in a tail cone of the fuselage. Some areas must be particularly protected from the fire hazard such as the passenger volume, but in general fire barrier between different volumes or areas are needed to limit the propagation of fire on board a vessel. Between an APU area and a passenger area, in most aircraft there is a lateral firewall.

On aircraft however a fire protection must be as light as possible. Indeed the lighter the aircraft the less fuel it will consume per passenger.

Also the structure and other elements of an aircraft must be protected against fire. For example if an APU is taking fire, the structure holding the APU and the fuselage around may not be damaged by the fire in order to keep the aircraft flight. Therefore, in an APU area there is generally a fireproof layer for protecting the structure, the fuselage, and systems installed along and inside the fuselage.

EP3248774 discloses a fireproof composite structure comprising a carbon fiber reinforced polymer (CFRP) lay-up with a glass fiber reinforced polymer (GFRP) on one of its side. The GFRP is beneficially oriented towards the area in which the fire may appear.

However the GFRP is denser than the CFRP. Therefore such protection is relatively heavy.

Also the GFRP is more complicated to fabricate and therefore more expensive.

The invention aims to provide a lightweight fire barrier.

The invention aims to provide a fire barrier with a reasonable manufacturing cost.

The invention aims to provide a fire barrier that can effectively protect aircraft structures against fire.

The invention proposes a device for limiting the propagation of fire comprising a plurality of overlaid layers comprising carbon fiber reinforced polymer, characterized in that it is exempt of glass fiber.

In the whole text, the term 'tape' is used for a composite material formed by a plurality of unidirectional fibers oriented in the same direction and forming a layer.

In the whole text, the term 'fabric' is used for a composite material formed by plurality of fibers oriented in two directions and forming a layer intersecting among them, for example woven fibers or woven tapes. Fibers in a first warp direction may be named warp fibers and fibers in a second direction, angled to the warp direction - for example perpendicular to warp direction, named weft direction may be named weft fibers.

A device according to the invention is therefore particularly lightweight, and may be manufactured at moderate costs.

A device according to the invention may only ensure a fire limitation function. It may also additionally ensure structural functions. In particular, a device according to the invention may carry loads and thus reinforce another structure, or it may form a structure by itself. A device according to the invention may form an additional layer on a face of a CFRP wall such that it may bear load together with the wall in order to reinforce the wall, while it also protects this face of the wall against fire.

A device according to the invention may exclusively comprise layers made of carbon fiber reinforced polymer.

The polymer, or resin, in which the carbon fibers are be embedded may be an Epoxy resin, forming a matrix around the carbon fibers. Compared to BMI resins, epoxy resins are easy to mold. It can thus be used in structures with a complex geometry. Additionally, epoxy resin are economical, and thus may provide for a manufacturing with moderated costs.

The layers of a device according the invention are joined together so as to form a cohesive thin structure. The device may be used to reinforce or to form a structure, a wall, a skin, etc.

The layers may be joined together by any available manufacturing method. Some examples of manufacturing method that may be used are: co-curing, gluing, etc.

A device according to the invention may comprise at least five layers each comprising carbon fiber reinforced polymer.

A device according to the invention may comprise at least one layer comprising a fabric of carbon fiber reinforced polymer.

The device may comprise at least one layer made of a fabric of carbon fiber reinforced polymer.

A device according to the invention may comprise at least five layers each comprising a fabric of carbon fiber reinforced polymer.

The device may comprise at least five layers made of a fabric of carbon fiber reinforced polymer. In some embodiments, the device may consist in exclusively five layers of carbon fiber reinforced polymer fabric.

Said fabric may have a thickness comprised between 250 and 310 micrometers, for example of about 280 micrometers.

The total thickness of the device may be comprised between 1250 micrometers and 1550 micrometers, in particular of about 1400 micrometers.

A device according to the invention may comprise at least one layer comprising a tape of carbon fiber reinforced polymer.

A device according to the invention may comprise a combination of at least one layer comprising carbon fiber reinforced polymer tape and at least one layer comprising carbon fiber reinforced polymer fabric.

A device according to the invention may comprise at least eight layers comprising a tape of carbon fiber reinforced polymer.

The device may comprise at least eight layers made of a tape of carbon fiber reinforced polymer. In some embodiments, the device may consist in exclusively eight layers of carbon fiber reinforced polymer tape.

In a device according to the invention said tape may comprise a plurality of carbon fibers oriented in one same direction.

In a device according to the invention said tape may have a thickness comprised between 150 and 210 micrometers.

Said tape may have a thickness comprised between 175 and 190 micrometers, for example of about 184 micrometers.

The total thickness of the device may be comprised between 1400 micrometers and 1520 micrometers, in particular of about 1472 micrometers.

A device according to the invention may comprise a plurality of tapes with different thicknesses.

In a device according to the invention, at least two layers may be anisotropic with a predetermined direction, and a first anisotropic layer and a second anisotropic layer may be overlaid with the predetermined direction of the second anisotropic layer being angled with a non-null angle to the predetermined direction of the first layer.

Two successive anisotropic layer may be angled with an angle of about 45 degrees.

A device according to the invention may for example comprise a least five CFRP layers arranged with the following angles, the predetermined direction of the first layer being used as reference (0 degrees):
- a first layer at 0 degrees,
- a second layer at 45 degrees,
- a third layer at 0 degrees,
- a fourth layer at 45 degrees,
- a fifth layer at 0 degrees.

A device according to the invention may for example comprise a least eight CFRP layers arranged with the following angles, the predetermined direction of the central layers being used as reference (0 degrees):
- a first layer at 45 degrees,
- a second layer at 135 degrees,
- a third layer at 90 degrees,
- a fourth layer at 0 degrees,
- a fifth layer at 0 degrees
- a sixth layer at 90 degrees,
- a seventh layer at 135 degrees,
- an eighth layer at 45 degrees.

The device forms a surface with two opposite faces. A device according to the invention may be symmetric on each side. That is the layers encountered from one face to an opposite face of the device are the same, whatever the face we are first considering.

Therefore it may protect from fire on any side. This allows to use a device according to the invention as a fire limitation from one compartment to another in any direction. Also, when the device is to be applied on another surface, such as a fuselage for example to protect the latter from fire, the manufacturing is simplified and the potential mistake are reduced because the device according to the invention protects against fire on any of its face.

A device according to the invention may form at least part or all of the skin of an aircraft. It may for example form the skin of a section of an aircraft such as an APU section for example. The fuselage of such section may thus be fire resistant.

A device according to the invention may comprise at least one joint between a first section comprising a plurality of overlaid layers comprising carbon fiber reinforced polymer, and a second section comprising a plurality of overlaid layers comprising carbon fiber reinforced polymer.

The joint between two CFRP sections may be obtained by overlapping the two section by a predetermined overlap width. The two section may be joined at the overlap section by co-curing or can be mechanically attached to each other, for example with rivets.

The joint is adapted to be at least as resistant as the CFRP sections. Fire may thus not propagate through the joints.

The invention also extends to an aircraft component comprising:
- a structural element,
- a device according to the invention.

The device according to the invention may protect the structural element and may additionally reinforce the structural element such as to bear loads.

The invention also extends to an aircraft comprising:
- an engine section adapted for receiving an engine,
- a cargo section adapted for receiving passengers or freight,
- a wall between the engine section and the cargo section, said wall comprising a plurality of overlaid layers comprising carbon fiber reinforced polymer, characterized in that the overlaid layers of said wall are exempt of glass fiber.

The invention also extends to other possible combinations of features described in the above description and in the following description relative to the figures. In particular, the invention also extends to an aircraft comprising part or all of the characteristics described in relation to a device for limiting the propagation of fire according to the invention.

Some specific exemplary embodiments and aspects of the invention are described in the following description in reference to the accompanying figures.
Figure 1 is a representation of a cross-section of a first embodiment of a device for limiting the propagation of fire according to the invention.
Figure 2 is a representation of a cross-section of a second embodiment of a device for limiting the propagation of fire according to the invention.
Figure 3 is a schematic representation of an aircraft rear portion comprising a device according to the invention.
Figure 4 is a schematic representation of an aircraft comprising a device according to the invention.

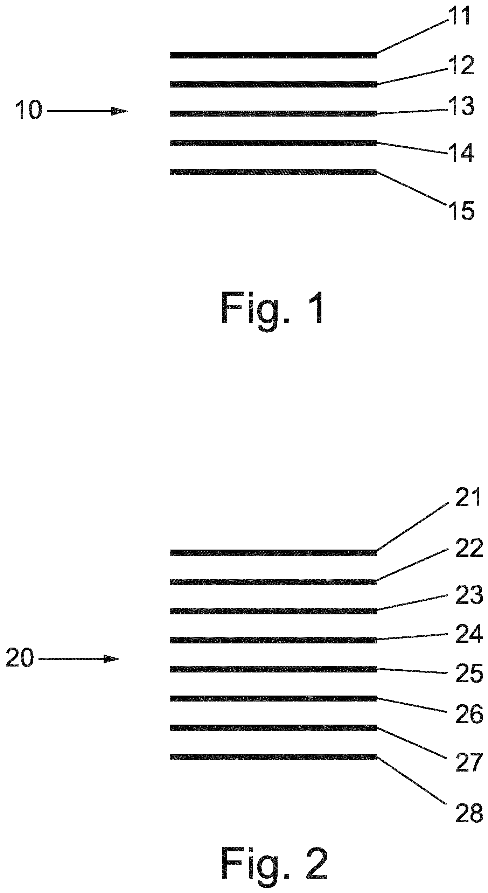

In Figure 1, a device 10 for limiting the propagation of fire comprising a plurality of layers made of carbon-fiber reinforced polymer (CFRP). The device forms a thin structure, similar to a mat that can be installed for example on walls of a compartment. In particular, it may be installed on the inner face of walls of a fire compartment of an aircraft such as an APU compartment for example.

The device comprises five layers of CFRP fabric. In this specific embodiment, the five layers are identical to each other, which allow to moderate manufacturing costs, and provides simplicity of manufacturing.

Each fabric layer may be a 5 HS type layer.

Each fabric layer may have a thickness comprised between 250 and 310 micrometers, for example of about 280 micrometers. The device has a total thickness of about 1400 micrometers.

The five layers of CFRP fabric are arranged with the following angles, the predetermined direction of the first layer being used as reference (0 degrees):
- a first layer 11 at 0 degrees,
- a second layer 12 at 45 degrees,
- a third layer 13 at 0 degrees,
- a fourth layer 14 at 45 degrees,
- a fifth layer 15 at 0 degrees.

In figure 2 a device 20 for limiting the propagation of fire comprising a plurality of layers made of carbon-fiber reinforced polymer (CFRP). The device forms a thin structure, similar to a mat that can be installed for example on walls of a compartment. In particular, it may be installed on the inner face of walls of a fire compartment of an aircraft such as an APU compartment for example.

The device comprises eight layers of CFRP tape. In this specific embodiment, the eight layers are identical to each other, which allow to moderate manufacturing costs, and provides simplicity of manufacturing. Each fabric layer may have a thickness comprised between 175 and 190 micrometers, for example of about 184 micrometers. The device has a total thickness of about 1472 micrometers.

The eight layers of CFRP tape are arranged with the following angles, the predetermined direction of the central layers being used as reference (0 degrees):
- a first layer 21 at 45 degrees,
- a second layer 22 at 135 degrees,
- a third layer 23 at 90 degrees,
- a fourth layer 24 at 0 degrees,
- a fifth layer 25 at 0 degrees
- a sixth layer 26 at 90 degrees,
- a seventh layer 27 at 135 degrees,
- an eighth layer 28 at 45 degrees.

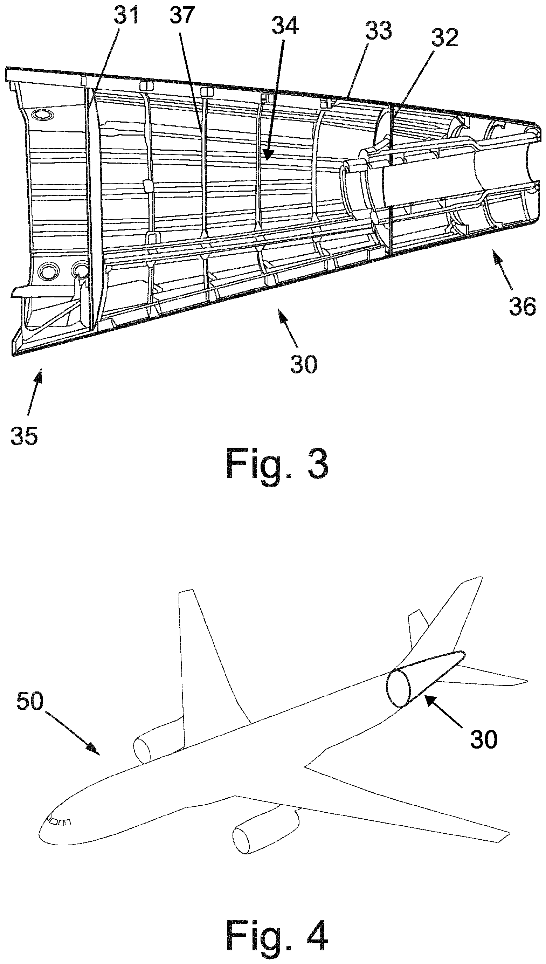

In figure 3 an aircraft component, which is an aft portion of an aircraft is represented. The aft section comprises an APU section 30 for containing an auxiliary power unit (APU) (not represented).

The APU section 30 is separated from a front section 35 by a wall 31.

The APU section 30 is separated from an aft section 36 by a wall 32.

The walls 31, 32 comprise a device according to the invention. In particular, they may be a multi-layered CFRP such as one of those described in relation to figure 1 or in relation to figure 2. The walls 31, 32 may thus limit the propagation of a fire from the APU section 30 to the front section 35 and/or to the aft section 36. A fire in the APU section 30 may thus be contained.

Moreover, the aft portion of the aircraft comprises a frame 37 covered with a skin 33, forming together a fuselage. The fuselage encloses a room 34 which can fit the APU. The fuselage comprises at least one device according to the invention. More particularly the fuselage, at least in the APU section 30, comprises a skin 33 comprising a device according to the invention. The skin 33 may be made of a device according to the invention, for example a device as described before in relation to figure 1 or a device as described in relation to figure 2. The fuselage's skin 33 may thus also be fire resistant and contain a fire occurring in the volume 34 of the APU section 30.

In figure 4 an aircraft 50 is represented which comprises an aft portion corresponding to the aft portion described in relation to figure 3. Front sections of the fuselage of the plane, which may be adapted to transport passengers and/or freight are thus isolated from the APU section with the fire protecting wall 31. The integrity of the aircraft, and in particular of the aft portion of the aircraft may thus be retained in case of a fire in the APU section 30.

The invention is not limited to the specific embodiments herein disclosed as examples. The invention also encompasses other embodiments not herein explicitly described, which may comprise various combinations of the features herein described.

## Claims

1. Device (10, 20) for limiting the propagation of fire comprising:
- a plurality of overlaid layers (11, 12, 13, 14, 15, 21, 22, 23, 24, 25, 26, 27, 28) comprising carbon fiber reinforced polymer,
**characterized in that** it is exempt of glass fiber.

2. Device according to claim 1, further **characterized in that** it exclusively comprises layers (11, 12, 13, 14, 15, 21, 22, 23, 24, 25, 26, 27, 28) made of carbon fiber reinforced polymer.

3. Device according to any of claim 1 or 2, further **characterized in that** it comprises at least five layers (11, 12, 13, 14, 15, 21, 22, 23, 24, 25, 26, 27, 28) each comprising carbon fiber reinforced polymer.

4. Device according to any of claim 1 to 3, further **characterized in that** it comprises at least one layer (11, 12, 13, 14, 15) comprising a fabric of carbon fiber reinforced polymer.

5. Device according to any of claim 1 to 4, further **characterized in that** it comprises at least five layers (11, 12, 13, 14, 15) each comprising a fabric of carbon fiber reinforced polymer.

6. Device according to any of claim 1 to 5, further **characterized in that** it comprises at least one layer (21, 22, 23, 24, 25, 26, 27, 28) comprising a tape of carbon fiber reinforced polymer.

7. Device according to any of claim 1 to 6, further **characterized in that** it comprises at least eight layers (21, 22, 23, 24, 25, 26, 27, 28) comprising a tape of carbon fiber reinforced polymer.

8. Device according to any of claim 6 or 7, further **characterized in that** said tape comprises a plurality of carbon fibers oriented in one same direction.

9. Device according to any of claim 6 to 8, further **characterized in that** said tape has a thickness comprised between 150 and 210 micrometers.

10. Device according to any of claim 1 to 9, further **characterized in that** at least two layers (11, 12, 13, 14, 15, 21, 22, 23, 24, 25, 26, 27, 28) are anisotropic with a predetermined direction, and that a first anisotropic layer and a second anisotropic layer are overlaid with the predetermined direction of the second anisotropic layer being angled with a non-null angle to the predetermined direction of the first layer.

11. Aircraft (50) component comprising:
- a structural element (37),
- a device (10, 20) according to any of claim 1 to 10.

12. Aircraft (50) comprising:
- an engine section (30) adapted for receiving an engine,
- a cargo section (35) adapted for receiving passengers or freight,
- a wall (31) between the engine section (30) and the cargo section (35), said wall (31) comprising a plurality of overlaid layers (11, 12, 13, 14, 15, 21, 22, 23, 24, 25, 26, 27, 28) comprising carbon fiber reinforced polymer,
**characterized in that** the overlaid layers of said wall are exempt of glass fiber.
